(19) Europäisches Patentamt
European Patent Office
Office européen des brevets

(11) **EP 1 724 371 B1**

(12) **EUROPEAN PATENT SPECIFICATION**

(45) Date of publication and mention
of the grant of the patent:
**07.02.2018 Bulletin 2018/06**

(51) Int Cl.:
*C22C 38/00* (2006.01)   *C22C 38/06* (2006.01)
*C22C 38/58* (2006.01)   *C21D 9/46* (2006.01)
*C23C 2/02* (2006.01)   *C23C 2/06* (2006.01)

(21) Application number: **05720077.6**

(22) Date of filing: **28.02.2005**

(86) International application number:
**PCT/JP2005/003805**

(87) International publication number:
**WO 2005/087965 (22.09.2005 Gazette 2005/38)**

(54) **ZINC HOT DIP GALVANIZED COMPOSITE HIGH STRENGTH STEEL PLATE EXCELLENT IN FORMABILITY AND BORE-EXPANDING CHARACTERISTICS AND METHOD FOR PRODUCTION THEREOF**

FEUERVERZINKTES HOCHFESTES VERBUNDSTAHLBLECH MIT HERVORRAGENDER FORMBARKEIT UND BOHRUNGSAUFWEITBARKEIT UND HERSTELLUNGSVERFAHREN DAFÜR

PLAQUE D'ACIER DE RÉSISTANCE ÉLEVÉE D'UN COMPOSITE GALVANISÉ À CHAUD AU TREMPÉ DE ZINC EXCELLENTE EN TERMES D'APTITUDE AU FAÇONNAGE ET DE CARACTÉRISTIQUES D'AGRANDISSEMENT D'ALÉSAGE, ET PROCÉDÉ DE FABRICATION DE CELLE-CI

(84) Designated Contracting States:
**AT BE BG CH CY CZ DE DK EE ES FI FR GB GR HU IE IS IT LI LT LU MC NL PL PT RO SE SI SK TR**

(30) Priority: **11.03.2004 JP 2004069368**

(43) Date of publication of application:
**22.11.2006 Bulletin 2006/47**

(73) Proprietor: **Nippon Steel & Sumitomo Metal Corporation**
**Tokyo 100-8071 (JP)**

(72) Inventors:
• **c/o Nippon Steel & Sumitomo Metal Corporation**
**Tokyo 100-8071 (JP)**
• **c/o Nippon Steel & Sumitomo Metal Corporation**
**Tokyo 100-8071 (JP)**
• **c/o Nippon Steel & Sumitomo Metal Corporation**
**Tokyo 100-8071 (JP)**
• **c/o Nippon Steel & Sumitomo Metal Corporation**
**Tokyo 100-8071 (JP)**

(74) Representative: **Vossius & Partner**
**Patentanwälte Rechtsanwälte mbB**
**Siebertstrasse 3**
**81675 München (DE)**

(56) References cited:
**EP-A- 1 512 760     EP-A- 1 707 645**
**JP-A- 5 331 537     JP-A- 6 108 152**
**JP-A- 2000 345 288     JP-A- 2001 031 050**
**JP-A- 2001 207 235     JP-A- 2003 239 040**
**JP-B2- 3 587 116**

**Description**

TECHNICAL FIELD

The present invention relates to a hot dip galvanized composite high strength steel sheet excellent in shapeability and hole enlargement ability and a method of production of the same.

BACKGROUND ART

In recent years, improved fuel economy of automobiles and reduced weight of chasses have been increasingly demanded. To reduce the weight, the need for high strength steel sheet has been rising. However, along with the rise in strength, this high strength steel sheet has become difficult to shape. In particular, steel materials have fallen in elongation. As opposed to this, recently, TRIP steel (high residual austenite steel) high in both strength and elongation has come to be used for the frame members of automobiles.

However, conventional TRIP steel contains over 1% of Si, so there were the problems that the plating is difficult to uniformly stick and therefore the member to which it can be applied are limited. Further, to maintain a high strength in residual austenite steel, a large amount of C has to be added. There were therefore problems in welding such as nugget cracking. For this reason, hot dip galvanized high strength steel sheet reduced in the amount of Si has been proposed in Japan Patent No. 2962038 and Japanese Patent Publication (A) No. 2000-345288. However, with this art, while an improvement in the platability and ductility can be expected, no improvement in the above-mentioned weldability can be expected. Further, with TS≥980 MPa TRIP steel, the yield stress becomes extremely high, so there was the problem of deterioration of the shape freezability at the time of pressing etc. Therefore, to solve the above problems in DP steel (composite structure steel), the inventors previously proposed, in Japanese Patent Application No. 2003-239040, art to set the Si, Al, and TS balance in a specific range and enable the industrial production of hot dip galvanized high strength steel sheet enabling an elongation higher than ever before in low yield stress DP steel to be secured. JP-A 2001 207 235 relates to a high strength hot dip galvanized steel plate excellent in workability containing 0.05-0.15 wt % C, 0.03-1.8 wt % Si, 1-3 wt % Mn wherein Al is limited to maximum 0.10 wt %. Further, recently, there are also quite a few members which are worked by burring to enlarge the worked hole part and form a flange. Steel sheet also having a hole enlargement ability as an important characteristic is therefore starting to be demanded. In respect to this demand, in the ferrite+martensite DP steel proposed in the above-mentioned Patent Document 2, since the difference in strength between the martensite and ferrite is large, there is the problem that the hole enlargement ability is inferior.

DISCLOSURE OF THE INVENTION

The present invention has as its object to resolve the above-mentioned conventional problems and realize a hot dip galvanized composite high strength steel sheet excellent in shapeability and hole enlargement ability and a method of production of the same on an industrial scale.

The inventors engaged in intensive studies on hot dip galvanized composite high strength steel sheet excellent in shapeability, plating adhesion, and hole enlargement ability and a method of production of the same and as a result discovered that by optimizing the steel ingredients, that is, reducing the amount of Si and using Al as an alternative element, it is possible to improve the adhesion of hot dip galvanization, that by specifying the relationship between Si and Al and limiting the amounts of addition of C and Mn, it is possible to give superior features of both strength and elongation, and that by applying the necessary heat treatment after the hot dip galvanization step, a material stable in hole enlargement ability and embrittlement can be obtained. The inventors discovered that in steel sheet designed based on this technical idea, by making low yield stress DP steel a metal structure mainly comprises ferrite in accordance with the conventional residual austenite steel and tempered martensite with an area rate of 5% to 60%, it is possible to secure an elongation greater than before and obtain a DP structure excellent in hole enlargement ability and optimal for hot dip galvanization.

Further, in the present invention, to prevent delayed fracture and secondary embrittlement or other problems from occurring, the unavoidably included 5% or less (but excluding 5%) residual austenite may be allowed. The present invention is based on the above technical idea.

The object above can be achieved by the features defined in the claims.

BEST MODE FOR WORKING THE INVENTION

First, the reasons for limitation of the ingredients and metal structure of the hot dip galvanized composite high strength steel sheet prescribed in the present invention will be explained.

C is an essential ingredient as a basic element for securing strength and stabilizing the martensite structure.

If C is less than 0.01%, the strength cannot be secured and no martensite phase will be formed. On the other hand, if over 0.3%, the strength will rise too much, the ductility will become insufficient, and the weldability will deteriorate. Therefore, the range of C is 0.01 to 0.3%, preferably 0.03 to 0.15%.

Si is an element added for securing strength and ductility, but if over 0.6%, the hot dip galvanization ability deteriorates. Therefore, the range of Si is made 0.005 to 0.6%. Further, when stressing the hot dip galvanization ability, not more than 0.1% is more preferable.

Mn is an element which has to be added from the viewpoint of securing the strength and in addition delays the formation of carbides and is an element required for the formation of austenite. If Mn is less than 0.1%, the strength is not satisfactory. Further, with addition over 3.3%, the martensite increases too much and invites a rise in strength, the variation in strength increases, and the ductility is insufficient, so use as an industrial material is not possible. For this reason, the range of Mn was made 0.1 to 3.3%.

P is added in accordance with the level of strength required as an element raising the strength of the steel sheet, but if the amount of addition is large, it segregates at the grain boundary, so degrades the local ductility and simultaneously degrades the weldability, so the upper limit value of P was made 0.06%. On the other hand, the lower limit of P was made 0.001% to avoid an increase in cost of refining.

Further, S is an element forming MnS and thereby degrading the local ductility and the weldability. It is an element preferably not present in the steel, so the upper limit value was made 0.01%. The lower limit was made 0.001% to avoid an increase in cost of refining.

Al is an element required for promoting the formation of ferrite and is effective in improving the ductility. Even if a large amount is added added, it does not inhibit the hot dip galvanizability. Further, it acts as a deoxidizing element. Even if Al is excessively added, its effect becomes saturated and conversely the steel becomes embrittled. Simultaneously, the hot dip galvanization ability is reduced. Therefore, the upper limit was made 1.8%. From the viewpoint of securing the steel sheet strength, addition of 0.25% to 1.8% is necessary.

N is an unavoidably included element, but when included in a large amount, not only is the aging effect deteriorated, but also the amount of deposition of AlN becomes greater and the effect of addition of Al is reduced, so 0.01% or less is preferably contained. Further, unnecessarily reducing the N increases the cost in the steel making process, so normally the amount of N is controlled to 0.0005% or more.

In the present invention, when further higher strength is required, to improve the plating adhesion, if adding a large amount of Al instead of Si, in particular when 0.25%≤Al≤1.8%, by making the balance of Al and Si with TS the following equation 1 in range, sufficient ferrite can be secured and both a greater hot dip galvanization ability and ductility can be secured.

$$(0.0012 \times [\text{TS target value}] - 0.29 - [\text{Si}])/1.45 < \text{Al} < 1.5 - 3 \times [\text{Si}] \ldots \text{ equation 1}$$

Here, in the above equation 1, [TS target value] means the design value of the tensile strength of the steel sheet (MPa), [Si] means the Si mass%, and Al means the Al mass%.

Further, in the present invention, in addition to the above ingredients, it is further possible to add one or more of Mo: 0.05 to 0.5%, V: 0.01 to 0.1%, Ti: 0.01 to 0.2%, Nb: 0.005 to 0.05%, Cu: 1% or less, Ni: 1% or less, Cr: 1% or less, Ca: 0.003 to 0.005%, REM: 0.0003 to 0.005%, and B: 0.0003 to 0.002%.

Mo has an effect on the steel sheet strength and hardenability. If less than 0.05%, the effect of hardenability distinctive to Mo cannot be exhibited, sufficient martensite will not be formed, and the strength will be insufficient. On the other hand, addition of 0.5% or more suppresses ferrite formation and degrades the ductility and simultaneously also degrades the plateability, so 0.5% was made the upper limit.

V, Ti, and Nb can be added for improvement of strength in ranges of V: 0.01 to 0.1%, Ti: 0.01 to 0.2%, and Nb: 0.005 to 0.05%. Further, Cr, Ni, and Cu may also be added as strengthening elements, but if 1% or more, the ductility and chemical convertability deteriorate. Further, Ca and a REM can improve the inclusion control and hole enlargement ability, so Ca: 0.0003 to 0.005% and REM: 0.0003 to 0.005% in range may be added. Further, B increases the hardenability and effective Al due to BN deposition, so B: 0.0003 to 0.002% can be added.

In the present invention, the structure of the steel sheet is made a composite structure of ferrite and martensite so as to obtain a steel sheet excellent in the strength and ductility balance. The "ferrite" indicates polygonal ferrite and bainitic ferrite. Note that the cooling after annealing may cause partial formation of bainite. Note that if austenite remains, the secondary work embrittlement and delayed fracture properties deteriorate, so while an unavoidably residual rate of deposition of 5% or less of residual austenite is allowed, it is preferred that substantially no residual austenite be included.

Further, in the present invention, the biggest feature in the metal structure of the hot dip galvanized composite high strength steel sheet is that the steel contains, by area rate, 5% to 60% of tempered martensite. This tempered martensite is the tempered martensite structure resulting from the martensite produced in the cooling process after the hot dip galvanization being cooled to the martensite transformation point or less, then being tempered by heat treatment at 200 to 500°C. Here, if the area rate of the tempered martensite is less than 5%, the hardness difference between structures becomes too large and no improvement in the hole enlargement rate is seen, while if over 60%, the steel sheet strength drops too much, so the area rate of the tempered martensite was made 5% to 60%. Further, the residual austenite is made 5% or less to prevent the problems of delayed fracture and secondary work embrittlement. This substantially results in ferrite, martensite, and a tempered martensite structure forming the main phase. The balanced presence of these in the steel sheet is believed to cause the workability and hole enlargement rate to be improved. Note that the sheet is cooled to the martensite transformation point temperature or less after the hot dip galvanization, then is heated and tempered because if performed before the plating, the plating step will then result in further tempering and the desired amount of tempered martensite will not be obtained.

Next, the method of production of a hot dip galvanized composite high strength steel sheet according to the present invention will be explained. The base material of the hot dip galvanized composite high strength steel sheet according to the present invention is a slab containing the above steel ingredients which is hot rolled by the usual process to produce hot rolled steel sheet which in turn is pickled, cold rolled, then run through a continuous hot dip galvanization line. In the heating process, the sheet is annealed at a temperature range of $Ac_1$ to $Ac_3$+100°C. In this case, with an annealing temperature of less than the $Ac_1$ in temperature, the structure of the steel sheet would become nonhomogeneous, while if over $Ac_3$+100°C in temperature, the austenite would become coarser, formation of ferrite would be suppressed, and the ductility would drop. From the economic viewpoint, the upper limit temperature is preferably 900°C or less. Further, the holding time in the annealing is preferably 30 seconds to 30 minutes in order to separate the layered structure. With over 30 second in holding time, the effect is saturated and the productivity falls. The thus annealed steel sheet is then cooled. At the time of cooling, the sheet is cooled by a 1°C/s or higher, preferably a 20°C/s or higher cooling rate to 450 to 600°C. With a cooling temperature over 600°C, austenite would easily remain in the steel sheet and the secondary workability and delayed fracture property would deteriorate. On the other hand, if less than 450°C, the temperature would become too low for the subsequent hot dip galvanization and the plating would be obstructed. Note that the cooling rate is made 1°C/s or more, preferably 20°C/s or more.

The thus annealed and cooled steel sheet may, during the hot dip galvanization, also be held at 300 to 500°C in temperature for 60 seconds to 20 minutes as overaging treatment. This overaging treatment is preferably not applied, but overaging treatment of the above-mentioned extent of conditions has no great effect on the material quality.

The thus treated steel sheet is then hot dip galvanized. This plating may be performed under the usually practiced plating conditions. The temperature of the hot dip galvanization bath may be one used in the past. For example, a condition of 440 to 500°C may be applied. Further, so long as the hot dip metal mainly comprises zinc, it may also contain unavoidable elements such as Pb, Cd, Ni, Fe, Al, Ti, Nb, Mn, etc. Further, to improve the quality of the plating layer etc., the plating layer may also contain predetermined amounts of Mg, Ti, Mn, Fe, Ni, Co, and Al. Further, by making the amount of the hot dip galvanization 30 to 200 g/m$^2$ per side of the steel sheet, use for various applications becomes possible. Note that in the present invention, after the above hot dip galvanization, it is also possible to perform alloying to obtain a hot dip galvannealed steel sheet. In this case, as the alloying conditions, use of 470 to 600°C enables a suitable concentration of Fe in the hot dip galvannealed layer. For example, the Fe can be controlled to, by mass%, 7 to 15%.

After the hot dip galvanization or after the hot dip galvannealization, the steel sheet is cooled to the martensite transformation point temperature or less to cause a martensite structure to be formed in the steel sheet. The martensite transformation point Ms is found by Ms (°C)=561-471×C(%)-33×Mn(%)-17×Ni(%)-17×Cr(%)-21×Mo(%), but at Ms (°C) or more, no martensite is formed. Further, the cooling rate in the cooling is preferably 1°C/s or more. To reliably obtain a martensite structure, a 3°C/s or higher cooling rate is preferable.

The thus treated steel sheet is then held at 200°C to 500°C in temperature for 1 second to 5 minutes, then is cooled at a 5°C/s or higher cooling rate to 100°C or less in temperature. In this heat treatment, at less than 200°C in temperature, tempering dues not occur, the difference in hardness between structures becomes great, and no improvement in the hole enlargement rate can be observed, while if over 500°C, the sheet is overly tempered and the strength falls. This heating process is connected to the continuous hot dip galvanization line. It is also possible to provide this at a separate line, but a line connected to the continuous hot dip galvanization line is preferable from the viewpoint of the productivity. Further, if said holding time is less than 1 second, there is almost no progress in tempering or the tempering becomes incomplete and no improvement in the hole enlargement rate can be observed. Further, if over 5 minutes, the tempering is almost completely finished, so the effect becomes saturated with over that time. Further, the cooling after the heating is performed by a cooling rate of 5°C/s or more, preferably 15°C/s or more, in order to maintain a predetermined amount of tempered martensite.

Note that in the present invention, to improve the corrosion resistance, the hot dip galvanized steel sheet or hot dip galvannealed steel sheet produced by the above process may be treated on its surface by one or more of chromate treatment, inorganic coating film treatment, conversion treatment, and resin coating film treatment.

Further, performing pickling in the continuous annealing process so as to remove the Si, Mn, and other oxides formed on the surface of the steel sheet is also an effective means for improving the plating adhesion. The pickling may be performed using hydrochloric acid, sulfuric acid, or other acids used in the past. For example, pickling conditions of a 2 to 20% pickling solution concentration and a 20 to 90°C temperature may be used. Further, dipping, electrolysis, spraying, or another pickling method tailored to the facility may be used. The pickling time depends on the acid concentration as well, but preferably is 1 to 20 seconds.

Further, to improve the plating adhesion, it is preferable to form an internal oxide layer or grain boundary oxides near the surface of the steel sheet before plating so as to prevent concentration of Mn or Si at the surface or to grind the surface by a grinding brush by a cleaning facility at the entry side to the hot dip galvanization heating process.

Example 1

Steel slabs obtained by melting and casting steel having the compositions of ingredients shown in Table 1 in a vacuum melting furnace were reheated at 1200°C, then hot rolled at a temperature of 880°C and finally rolled to produce hot rolled steel sheets. These were then cooled, coiled at a coiling temperature of 600°C, and held at that temperature for 1 hour to reproduce coiling heat treatment of hot rolling. The obtained hot rolled steel sheets were ground to remove the scale, cold rolled by a 70% reduction rate, then heated to a temperature of 800°C using a continuous annealing simulator, heated to a temperature of 800°C, then held at that temperature for 100 seconds for continuous annealing. Next, the sheets were cooled by 5°C/s to 650°C, then were hot dip galvanized at 460°C and alloyed at a temperature of 520°C. Next, they were processed by two methods of production, that is, the conventional method and the invention method, to produce galvanized steel sheets.

(1) Conventional method: After this, cooling at 10°C/s to ordinary temperature.
(2) Invention example: After this, cooling at 10°C/s to martensite transformation point or less, then heating at 300°C in temperature for 60 seconds, then cooling at 20°C/s cooling rate to 100°C or less.

The results are shown in Table 2 and Table 3.

Note that the tensile strength (TS), hole enlargement rate, metal structure, plating adhesion, plating appearance, and judgment of passage shown in Table 2 and Table 3 were as follows:

- Tensile strength: Evaluated by L-direction tension of JIS No. 5 tensile test piece.
- Hole enlargement rate: The hole enlargement test method of Japan Iron and Steel Federation standard, JFS T1001-1996 was employed. A 10 mm$\phi$ punched hole (die inside diameter of 10.3 mm, clearance of 12.5%) was enlarged by a 60° vertex conical punch in the direction with the burr of the punched hole at the outside at a rate of 20 mm/min.

$$\text{Hole enlargement rate: } \lambda \text{ (\%)} = \{(D-D_o)/D_o\} \times 100$$

D: Hole diameter when crack passes through sheet thickness (mm)
Do: Initial hole diameter (mm)

- Metal structure: Observed under optical microscope and, for ferrite, observed by Nital etching and, for martensite, by repeller etching.

The area ratio of tempered martensite was quantized by polishing a sample by repeller etching (alumina finish), immersing it in a corrosive solution (mixed solution of pure water, sodium pyrophosphite, ethyl alcohol, and picric acid) for 10 seconds, then again polishing it, rinsing it, then drying the sample by cold air. The structure of the dried sample was observed under a magnification of 1000X and a 100 $\mu$m x 100 $\mu$m area was measured by a Luzex apparatus to determine the area% of the tempered martensite. Table 2 and Table 3 show the area percent of this tempered martensite as the "tempered martensite area%".

- Plating adhesion: Evaluated from state of plating peeling of bent part in 60°V bending test.

Very good: Small plating peeling (peeling width less than 3 mm)
Good: Light peeling of extent not posing practical problem (peeling width of 3 mm to less than 7 mm)
Fair: Considerable amount of peeling observed (peeling width of 7 mm to less than 10 mm)

Poor: Extreme peeling (peeling width of 10 mm or more)

A plating adhesion of "very good" or "good" was deemed passing.

- Plating appearance: Visual observation

   Very good: No nonplating or unevenness, even appearance
   Good: No nonplating, uneven appearance of extent not posing practical problem
   Fair: Remarkable uneven appearance
   Poor: Nonplating and remarkable uneven appearance

A plating appearance of "very good" or "good" was deemed passing.

- Passing: $TS \geq 540$ MPa, $TS \times El \geq 18,000$

   Hole enlargement rate: $TS < 980$ MPa... 50% or more considered passing
   $TS \times 980$ MPa... 40% or more considered passing

Table 1/Ingredients

| Steel type | TS target | C | Si | Mn | P | S | N | Al | Mo | V |
|---|---|---|---|---|---|---|---|---|---|---|
| C | 480 | 0.018 | 0.176 | 1.31 | 0.032 | 0.005 | 0.0070 | 0.810 | | |
| D | 500 | 0.018 | 0.112 | 2.35 | 0.043 | 0.006 | 0.0100 | 0.990 | | |
| E | 540 | 0.027 | 0.074 | 2.87 | 0.016 | 0.003 | 0.0050 | 0.430 | | |
| F | 550 | 0.030 | 0.177 | 1.11 | 0.016 | 0.009 | 0.0050 | 0.950 | | |
| G | 560 | 0.032 | 0.186 | 2.78 | 0.029 | 0.006 | 0.0030 | 0.930 | | |
| H | 570 | 0.044 | 0.100 | 2.34 | 0.039 | 0.002 | 0.0080 | 0.300 | | |
| I | 580 | 0.058 | 0.171 | 2.06 | 0.056 | 0.007 | 0.0030 | 0.970 | | |
| J | 580 | 0.058 | 0.160 | 0.17 | 0.033 | 0.002 | 0.0080 | 0.900 | 0.180 | |
| K | 590 | 0.071 | 0.196 | 1.42 | 0.037 | 0.003 | 0.0050 | 0.550 | | |
| L | 640 | 0.082 | 0.089 | 1.15 | 0.016 | 0.004 | 0.0050 | 1.140 | | |
| M | 680 | 0.082 | 0.081 | 2.93 | 0.040 | 0.001 | 0.0030 | 1.050 | | |
| N | 700 | 0.093 | 0.055 | 1.84 | 0.007 | 0.006 | 0.0070 | 0.500 | | |
| O | 760 | 0.100 | 0.013 | 0.70 | 0.002 | 0.080 | 0.0040 | 0.810 | | |
| P | 780 | 0.110 | 0.122 | 2.64 | 0.057 | 0.009 | 0.0020 | 0.730 | | |
| Q | 800 | 0.120 | 0.084 | 0.17 | 0.010 | 0.010 | 0.0040 | 0.870 | | |
| R | 840 | 0.120 | 0.148 | 0.19 | 0.016 | 0.008 | 0.0060 | 1.000 | | |
| S | 900 | 0.134 | 0.047 | 0.19 | 0.042 | 0.010 | 0.0070 | 1.110 | | |
| T | 920 | 0.140 | 0.042 | 1.71 | 0.021 | 0.006 | 0.0050 | 0.780 | | |
| U | 950 | 0.144 | 0.076 | 0.89 | 0.033 | 0.011 | 0.0060 | 0.580 | 0.190 | |
| V | 950 | 0.142 | 0.116 | 0.27 | 0.046 | 0.007 | 0.0060 | 0.850 | 0.250 | |
| W | 980 | 0.147 | 0.122 | 0.92 | 0.035 | 0.009 | 0.0070 | 0.680 | 0.270 | |
| X | 980 | 0.150 | 0.107 | 1.76 | 0.059 | 0.006 | 0.0090 | 0.880 | | |
| Y | 1280 | 0.210 | 0.153 | 1.20 | 0.025 | 0.005 | 0.0020 | 0.780 | | |
| Z | 1320 | 0.235 | 0.176 | 2.73 | 0.051 | 0.008 | 0.0040 | 0.850 | | |
| AA | 950 | 0.122 | 0.275 | 0.27 | 0.046 | 0.007 | 0.0060 | 0.650 | | |
| AB | 1180 | 0.152 | 0.118 | 1.95 | 0.055 | 0.008 | 0.0090 | 0.720 | 0.280 | |
| AC | 1180 | 0.150 | 0.107 | 2.99 | 0.059 | 0.006 | 0.0090 | 0.880 | | |
| AD | 1200 | 0.210 | 0.299 | 1.20 | 0.025 | 0.005 | 0.0020 | 0.600 | | 0.050 |
| AE | 1350 | 0.250 | 0.233 | 1.36 | 0.039 | 0.009 | 0.0080 | 0.750 | 0.270 | |
| AF | 1480 | 0.289 | 0.186 | 2.06 | 0.052 | 0.004 | 0.0080 | 0.910 | | |
| AG | 780 | 0.095 | 0.247 | 2.09 | 0.008 | 0.007 | 0.0029 | 0.892 | | |
| AH | 780 | 0.101 | 0.226 | 2.68 | 0.006 | 0.008 | 0.0080 | 1.712 | | |
| AI | 1130 | 0.261 | 0.276 | 0.43 | 0.043 | 0.009 | 0.0090 | 0.815 | | 0.050 |
| AJ | 1470 | 0.300 | 0.289 | 0.47 | 0.038 | 0.005 | 0.0005 | 1.391 | | |
| AM | 310 | 0.009 | 0.202 | 0.43 | 0.007 | 0.010 | 0.0063 | 1.778 | | |
| AN | 1570 | 0.320 | 0.113 | 2.92 | 0.003 | 0.006 | 0.0007 | 0.462 | | |
| AO | 980 | 0.166 | 0.607 | 2.64 | 0.056 | 0.009 | 0.0049 | 0.422 | | 0.050 |
| AP | 880 | 0.113 | 0.083 | 0.09 | 0.049 | 0.001 | 0.0006 | 0.527 | | |
| AQ | 1180 | 0.164 | 0.285 | 3.44 | 0.020 | 0.004 | 0.0041 | 1.247 | 0.072 | |
| AR | 780 | 0.125 | 0.267 | 2.06 | 0.070 | 0.003 | 0.0009 | 0.337 | | |
| AS | 540 | 0.058 | 0.131 | 2.50 | 0.002 | 0.020 | 0.0059 | 0.377 | | |
| AT | 540 | 0.026 | 0.145 | 0.15 | 0.011 | 0.010 | 0.0200 | 0.273 | | |
| AU | 720 | 0.099 | 0.188 | 0.45 | 0.046 | 0.002 | 0.0030 | 0.009 | | |
| AV | 880 | 0.130 | 0.186 | 2.39 | 0.051 | 0.006 | 0.0030 | 2.010 | | |

Table 1 (continued)

| Steel type | Ti | Nb | Cu | Ni | Cr | Ca | B | REM | Class |
|---|---|---|---|---|---|---|---|---|---|
| C | | 0.040 | | | | | | | Inv. ingr. |
| D | 0.040 | | | | | | | | Inv. ingr. |
| E | | | | | | | | | Inv. ingr. |
| F | | | | | | | | | Inv. ingr. |
| G | | | | | | | | | Inv. ingr. |
| H | | | | | | | | | Inv. ingr. |
| I | | | | | | | | | Inv. ingr. |
| J | | | | | | | | | Inv. ingr. |
| K | | | | | | | | | Inv. ingr. |
| L | | | | | | | | 0.0020 | Inv. ingr. |
| M | | | | | | | 0.0010 | | Inv. ingr. |
| N | | | | | | | | | Inv. ingr. |
| O | | | | | | 0.0030 | | | Inv. ingr. |
| P | | | | | | | | | Inv. ingr. |
| Q | | | | | 0.060 | | | | Inv. ingr. |
| R | | | | | | | | | Inv. ingr. |
| S | | | 0.010 | 0.010 | | | | | Inv. ingr. |
| T | | | | | | | | | Inv. ingr. |
| U | | | | | | | | | Inv. ingr. |
| V | | | | | | | | | Inv. ingr. |
| W | | | | | | | | | Inv. ingr. |
| X | | | | | | | | | Inv. ingr. |
| Y | | | | | | | | | Inv. ingr. |
| Z | | 0.020 | | | | | | | Inv. ingr. |
| AA | | | | | | | | | Inv. ingr. |
| AB | | | | | | | | | Inv. ingr. |
| AC | 0.060 | | | | | | | | Inv. ingr. |
| AD | | | | | | | | | Inv. ingr. |
| AE | | | | | | | | | Inv. ingr. |
| AF | | | | | | | | | Inv. ingr. |
| AG | | | | | | | | | Inv. ingr. |
| AH | | | | | | | | | Inv. ingr. |
| AI | | | | | | | | | Inv. ingr. |
| AJ | | | | | | | | | Inv. ingr. |
| AM | | | | | | | | | Comp. ingr. |
| AN | | | 0.020 | 0.025 | | | | 0.0030 | Comp. ingr. |
| AO | | | | | | 0.0030 | | | Comp. ingr. |
| AP | 0.022 | 0.027 | | | | | 0.0010 | | Comp. ingr. |
| AQ | | | | | | | | | Comp. ingr. |
| AR | | | | | | | | | Comp. ingr. |
| AS | | 0.023 | | | 0.025 | | | | Comp. ingr. |
| AT | | | | | | | | | Comp. ingr. |
| AU | | | | | | | | | Comp. ingr. |
| AV | | | | | | | | | Comp. ingr. |

Table 2/Method of Production (1)

| Exper. no. | Steel type | TS (MPa) | EL (%) | TSxEL | (A) equation | | | | |
|---|---|---|---|---|---|---|---|---|---|
| | | | | | TS target value (MPa) | (A) equation left side | A1 | (A) equation right side | (A) equation judgment |
| 3 | C | 476 | 37.9 | 18040 | 480 | 0.076 | 0.810 | 0.972 | Good |
| 4 | D | 508 | 36.9 | 18745 | 500 | 0.137 | 0.990 | 1.164 | Good |
| 5 | E | 551 | 33.0 | 18183 | 540 | 0.196 | 0.430 | 1.278 | Good |
| 6 | F | 549 | 33.1 | 18172 | 550 | 0.133 | 0.950 | 0.969 | Good |
| 7 | G | 568 | 32.5 | 18460 | 560 | 0.135 | 0.930 | 0.942 | Good |
| 8 | H | 582 | 31.9 | 18566 | 570 | 0.203 | 0.300 | 1.200 | Good |
| 9 | I | 591 | 30.9 | 18262 | 580 | 0.162 | 0.970 | 0.987 | Good |
| 10 | J | 584 | 31.2 | 18221 | 580 | 0.170 | 0.900 | 1.020 | Good |
| 11 | K | 605 | 29.9 | 18090 | 590 | 0.153 | 0.550 | 0.912 | Good |
| 12 | L | 632 | 30.1 | 19023 | 640 | 0.268 | 1.140 | 1.233 | Good |
| 13 | M | 688 | 28.7 | 19746 | 680 | 0.307 | 1.050 | 1.257 | Good |
| 14 | N | 695 | 27.2 | 18904 | 700 | 0.341 | 0.500 | 1.335 | Good |
| 15 | O | 743 | 24.8 | 18426 | 760 | 0.420 | 0.810 | 1.461 | Good |
| 16 | P | 812 | 23.2 | 18838 | 780 | 0.361 | 0.730 | 1.134 | Good |
| 17 | Q | 825 | 22.8 | 18810 | 800 | 0.404 | 0.870 | 1.248 | Good |
| 18 | R | 852 | 21.5 | 18318 | 840 | 0.393 | 1.000 | 1.056 | Good |
| 19 | S | 905 | 20.1 | 18191 | 900 | 0.512 | 1.110 | 1.359 | Good |
| 20 | T | 899 | 20.5 | 18430 | 920 | 0.532 | 0.780 | 1.374 | Good |
| 21 | U | 952 | 19.0 | 18088 | 950 | 0.534 | 0.580 | 1.272 | Good |
| 22 | V | 934 | 19.5 | 18213 | 950 | 0.506 | 0.850 | 1.152 | Good |
| 23 | W | 987 | 19.1 | 18852 | 980 | 0.527 | 0.680 | 1.134 | Good |
| 24 | X | 1024 | 18.2 | 18637 | 980 | 0.537 | 0.880 | 1.179 | Good |
| 25 | Y | 1320 | 14.9 | 19668 | 1280 | 0.754 | 0.780 | 1.041 | Good |
| 26 | Z | 1400 | 13.5 | 18900 | 1320 | 0.771 | 0.850 | 0.972 | Good |
| 27 | AA | 965 | 19.9 | 19204 | 950 | 0.397 | 0.650 | 0.675 | Good |
| 28 | AB | 1206 | 15.2 | 18331 | 1180 | 0.695 | 0.720 | 1.146 | Good |
| 29 | AC | 1230 | 15.8 | 19434 | 1180 | 0.703 | 0.880 | 1.179 | Good |
| 30 | AD | 1220 | 15.3 | 18666 | 1200 | 0.587 | 0.600 | 0.603 | Good |
| 31 | AE | 1364 | 13.4 | 18278 | 1350 | 0.757 | 0.750 | 0.801 | Poor |
| 32 | AF | 1520 | 12.2 | 18544 | 1480 | 0.897 | 0.910 | 0.942 | Good |
| 33 | AG | 795 | 22.5 | 17888 | 780 | 0.275 | 0.892 | 0.759 | Poor |
| 34 | AH | 825 | 20.9 | 17243 | 780 | 0.290 | 1.712 | 0.822 | Poor |
| 35 | AI | 1158 | 15.1 | 17486 | 1130 | 0.545 | 0.815 | 0.672 | Poor |
| 36 | AJ | 1476 | 12.2 | 18007 | 1470 | 0.817 | 1.391 | 0.633 | Poor |
| 39 | AM | 335 | 33.2 | 11122 | 310 | -0.083 | 1.778 | 0.894 | Poor |
| 40 | AN | 1623 | 7.8 | 12659 | 1570 | 1.021 | 0.462 | 1.161 | Poor |
| 41 | AO | 985 | 17.5 | 17238 | 980 | 0.192 | 0.422 | -0.321 | Poor |
| 42 | AP | 885 | 18.5 | 16373 | 880 | 0.471 | 0.527 | 1.251 | Good |
| 43 | AQ | 1235 | 10.2 | 12597 | 1180 | 0.580 | 1.247 | 0.645 | Poor |
| 44 | AR | 795 | 20.1 | 15980 | 780 | 0.261 | 0.337 | 0.699 | Good |
| 45 | AS | 587 | 26.5 | 15556 | 540 | 0.157 | 0.377 | 1.107 | Good |
| 46 | AT | 557 | 31.2 | 17378 | 540 | 0.147 | 0.273 | 1.065 | Good |
| 47 | AU | 750 | 22.2 | 16650 | 720 | 0.266 | 0.009 | 0.936 | Poor |
| 48 | AV | 899 | 18.6 | 16721 | 880 | 0.400 | 2.010 | 0.942 | Poor |

Table 2 (continued)

| Experiment no. | Tempered martensite area (%) | Hole enlargement rate (%) | Plating adhesion | Plating appearance | Class |
|---|---|---|---|---|---|
| 3 | <5% | 73 | Good | Very good | Comp. ex. |
| 4 | <5% | 70 | Very good | Very good | Comp. ex. |
| 5 | <5% | 66 | Very good | Very good | Comp. ex. |
| 6 | <5% | 65 | Good | Very good | Comp. ex. |
| 7 | <5% | 63 | Good | Very good | Comp. ex. |
| 8 | <5% | 61 | Very good | Very good | Comp. ex. |
| 9 | <5% | 60 | Good | Good | Comp. ex. |
| 10 | <5% | 62 | Good | Good | Comp. ex. |
| 11 | <5% | 58 | Good | Very good | Comp. ex. |
| 12 | <5% | 60 | Very good | Very good | Comp. ex. |
| 13 | <5% | 58 | Very good | Very good | Comp. ex. |
| 14 | <5% | 56 | Very good | Very good | Comp. ex. |
| 15 | <5% | 55 | Very good | Very good | Comp. ex. |
| 16 | <5% | 54 | Good | Very good | Comp. ex. |
| 17 | <5% | 53 | Very good | Very good | Comp. ex. |
| 18 | <5% | 51 | Good | Very good | Comp. ex. |
| 19 | <5% | 50 | Very good | Very good | Comp. ex. |
| 20 | <5% | 49 | Very good | Very good | Comp. ex. |
| 21 | <5% | 44 | Good | Very good | Comp. ex. |
| 22 | <5% | 47 | Good | Very good | Comp. ex. |
| 23 | <5% | 46 | Good | Very good | Comp. ex. |
| 24 | <5% | 45 | Good | Very good | Comp. ex. |
| 25 | <5% | 38 | Good | Good | Comp. ex. |
| 26 | <5% | 37 | Good | Good | Comp. ex. |
| 27 | <5% | 48 | Good | Good | Comp. ex. |
| 28 | <5% | 39 | Good | Good | Comp. ex. |
| 29 | <5% | 41 | Very good | Very good | Comp. ex. |
| 30 | <5% | 40 | Good | Good | Comp. ex. |
| 31 | <5% | 37 | Good | Good | Comp. ex. |
| 32 | <5% | 35 | Good | Good | Comp. ex. |
| 33 | <5% | 54 | Good | Good | Comp. ex. |
| 34 | <5% | 52 | Good | Good | Comp. ex. |
| 35 | <5% | 41 | Good | Good | Comp. ex. |
| 36 | <5% | 35 | Good | Good | Comp. ex. |
| 39 | <5% | 64 | Good | Good | Comp. ex. |
| 40 | <5% | 27 | Good | Very good | Comp. ex. |
| 41 | <5% | 47 | Fair | Fair | Comp. ex. |
| 42 | <5% | 45 | Very good | Very good | Comp. ex. |
| 43 | <5% | 30 | Fair | Fair | Comp. ex. |
| 44 | <5% | 50 | Good | Good | Comp. ex. |
| 45 | <5% | 56 | Good | Very good | Comp. ex. |
| 46 | <5% | 60 | Good | Very good | Comp. ex. |
| 47 | <5% | 50 | Good | Good | Comp. ex. |
| 48 | <5% | 49 | Poor | Poor | Comp. ex. |

Table 3/Method of Production (2)

| Exper. no. | Steel type | TS (MPa) | EL (%) | TSxEL | (A) equation | | | | |
|---|---|---|---|---|---|---|---|---|---|
| | | | | | TS target value (*) (MPa) | (A) equation left side | Al | (A) equation right side | (A) equation judgment |
| 3 | C | 443 | 42.4 | 18791 | 440 | 0.043 | 0.810 | 0.972 | Good |
| 4 | D | 467 | 40.2 | 18798 | 460 | 0.103 | 0.990 | 1.164 | Good |
| 5 | E | 501 | 36.3 | 18201 | 500 | 0.163 | 0.430 | 1.278 | Good |
| 6 | F | 511 | 37.1 | 18928 | 510 | 0.100 | 0.950 | 0.969 | Good |
| 7 | G | 523 | 35.4 | 18512 | 520 | 0.102 | 0.930 | 0.942 | Good |
| 8 | H` | 530 | 35.1 | 18584 | 530 | 0.170 | 0.300 | 1.200 | Good |
| 9 | I | 550 | 34.6 | 19022 | 540 | 0.129 | 0.970 | 0.987 | Good |
| 10 | J | 537 | 34.0 | 18272 | 530 | 0.128 | 0.900 | 1.020 | Good |
| 11 | K | 551 | 32.9 | 18108 | 550 | 0.120 | 0.550 | 0.912 | Good |
| 12 | L | 594 | 33.7 | 20028 | 590 | 0.227 | 1.140 | 1.233 | Good |
| 13 | M | 633 | 31.3 | 19801 | 630 | 0.266 | 1.050 | 1.257 | Good |
| 14 | N | 653 | 29.9 | 19547 | 650 | 0.300 | 0.500 | 1.335 | Good |
| 15 | O | 706 | 27.8 | 19606 | 700 | 0.370 | 0.810 | 1.461 | Good |
| 16 | P | 747 | 25.3 | 18891 | 740 | 0.328 | 0.730 | 1.134 | Good |
| 17 | Q | 767 | 25.1 | 19243 | 760 | 0.371 | 0.870 | 1.248 | Good |
| 18 | R | 809 | 24.1 | 19490 | 800 | 0.360 | 1.000 | 1.056 | Good |
| 19 | S | 860 | 22.3 | 19182 | 860 | 0.479 | 1.110 | 1.359 | Good |
| 20 | T | 863 | 23.2 | 19992 | 860 | 0.483 | 0.780 | 1.374 | Good |
| 21 | U | 895 | 21.1 | 18873 | 890 | 0.484 | 0.580 | 1.272 | Good |
| 22 | V | 897 | 22.4 | 20107 | 890 | 0.457 | 0.850 | 1.152 | Good |
| 23 | W | 928 | 21.2 | 19670 | 920 | 0.477 | 0.680 | 1.134 | Good |
| 24 | X | 922 | 20.2 | 18618 | 920 | 0.488 | 0.880 | 1.179 | Good |
| 25 | Y | 1228 | 16.8 | 20669 | 1220 | 0.704 | 0.780 | 1.041 | Good |
| 26 | Z | 1274 | 15.5 | 19779 | 1260 | 0.721 | 0.850 | 0.972 | Good |
| 27 | AA | 907 | 22.1 | 20037 | 890 | 0.347 | 0.650 | 0.675 | Good |
| 28 | AB | 1134 | 16.9 | 19127 | 1120 | 0.646 | 0.720 | 1.146 | Good |
| 29 | AC | 1132 | 17.9 | 20204 | 1120 | 0.653 | 0.880 | 1.179 | Good |
| 30 | AD | 1147 | 17.6 | 20178 | 1140 | 0.537 | 0.600 | 0.603 | Good |
| 31 | AE | 1296 | 14.9 | 19274 | 1290 | 0.707 | 0.750 | 0.801 | Good |
| 32 | AF | 1429 | 13.5 | 19349 | 1420 | 0.847 | 0.910 | 0.942 | Good |
| 33 | AG | 731 | 25.4 | 18596 | 730 | 0.234 | 0.892 | 0.759 | Poor |
| 34 | AH | 751 | 24.0 | 18044 | 740 | 0.257 | 1.712 | 0.822 | Poor |
| 35 | AI | 1077 | 17.4 | 18701 | 1070 | 0.495 | 0.815 | 0.672 | Poor |
| 36 | AJ | 1402 | 13.8 | 19331 | 1400 | 0.759 | 1.391 | 0.633 | Poor |
| 39 | AM | 312 | 37.2 | 11585 | 300 | -0.091 | 1.778 | 0.894 | Poor |
| 40 | AN | 1493 | 8.5 | 12695 | 1490 | 0.955 | 0.462 | 1.161 | Poor |
| 41 | AO | 896 | 19.3 | 17255 | 890 | 0.118 | 0.422 | -0.321 | Poor |
| 42 | AP | 823 | 20.7 | 17054 | 820 | 0.421 | 0.527 | 1.251 | Good |
| 43 | AQ | 1136 | 11.1 | 12632 | 1120 | 0.530 | 1.247 | 0.645 | Poor |
| 44 | AR | 723 | 22.1 | 15995 | 720 | 0.212 | 0.337 | 0.699 | Good |
| 45 | AS | 546 | 29.7 | 16203 | 540 | 0.157 | 0.377 | 1.107 | Good |
| 46 | AT | 512 | 34.0 | 17427 | 510 | 0.122 | 0.273 | 1.065 | Good |
| 47 | AU | 683 | 24.4 | 16667 | 680 | 0.233 | 0.009 | 0.936 | Poor |
| 48 | AV | 809 | 20.3 | 16404 | 800 | 0.334 | 2.010 | 0.942 | Poor |

*: Corrected TS target value considering tempering

## Table 3 (continued)

| Experiment no. | Tempered martensite area (%) | Hole enlargement rate (%) | Plating adhesion | Plating appearance | Class |
|---|---|---|---|---|---|
| 3 | 6.4 | 86 | Good | Very good | Inv. ex. |
| 4 | 6.7 | 82 | Very good | Very good | Inv. ex. |
| 5 | 7.8 | 77 | Very good | Very good | Inv. ex. |
| 6 | 9.0 | 76 | Good | Very good | Inv. ex. |
| 7 | 9.7 | 74 | Good | Very good | Inv. ex. |
| 8 | 11.4 | 72 | Very good | Very good | Inv. ex. |
| 9 | 14.6 | 71 | Good | Good | Inv. ex. |
| 10 | 13.5 | 72 | Good | Good | Inv. ex. |
| 11 | 17.2 | 68 | Good | Very good | Inv. ex. |
| 12 | 20.3 | 71 | Very good | Very good | Inv. ex. |
| 13 | 21.1 | 67 | Very good | Very good | Inv. ex. |
| 14 | 21.5 | 66 | Very good | Very good | Inv. ex. |
| 15 | 22.3 | 65 | Very good | Very good | Inv. ex. |
| 16 | 24.6 | 63 | Good | Very good | Inv. ex. |
| 17 | 21.1 | 61 | Very good | Very good | Inv. ex. |
| 18 | 21.6 | 60 | Good | Very good | Inv. ex. |
| 19 | 22.8 | 59 | Very good | Very good | Inv. ex. |
| 20 | 24.3 | 58 | Very good | Very good | Inv. ex. |
| 21 | 25.2 | 52 | Good | Very good | Inv. ex. |
| 22 | 25.0 | 56 | Good | Very good | Inv. ex. |
| 23 | 26.2 | 55 | Good | Very good | Inv. ex. |
| 24 | 25.9 | 54 | Good | Very good | Inv. ex. |
| 25 | 42.7 | 45 | Good | Good | Inv. ex. |
| 26 | 45.5 | 45 | Good | Good | Inv. ex. |
| 27 | 22.3 | 57 | Good | Good | Inv. ex. |
| 28 | 26.9 | 46 | Good | Good | Inv. ex. |
| 29 | 26.7 | 49 | Very good | Very good | Inv. ex. |
| 30 | 43.0 | 47 | Good | Good | Inv. ex. |
| 31 | 47.6 | 45 | Good | Good | Inv. ex. |
| 32 | 50.4 | 41 | Good | Good | Inv. ex. |
| 33 | 20.9 | 64 | Good | Good | Inv. ex. |
| 34 | 22.5 | 62 | Good | Good | Inv. ex. |
| 35 | 47.6 | 49 | Good | Good | Inv. ex. |
| 36 | 55.3 | 42 | Good | Good | Inv. ex. |
| 39 | <5% | 75 | Good | Good | Comp. ex. |
| 40 | 65.3 | 36 | Good | Very good | Comp. ex. |
| 41 | 31.2 | 57 | Fair | Fair | Comp. ex. |
| 42 | 25.1 | 54 | Very good | Very good | Comp. ex. |
| 43 | 38.0 | 37 | Fair | Fair | Comp. ex. |
| 44 | 21.4 | 59 | Good | Good | Comp. ex. |
| 45 | 12.1 | 66 | Good | Very good | Comp. ex. |
| 46 | 8.5 | 71 | Good | Very good | Comp. ex. |
| 47 | 22.2 | 59 | Good | Good | Comp. ex. |
| 48 | 22.4 | 57 | Poor | Poor | Comp. ex. |

As will be understood from Example 1, the invention examples described in Table 3 are increased in amount of tempered martensite over the comparative examples of the same experiment numbers described in Table 2 and therefore are improved in hole enlargement ability. Further, when equation 1 is not satisfied, while the passing condition is satisfied, compared with steel types with the same degree of TS, the elongation is poor and, as a result, the TSxEl tends to fall.

Example 2

Steel slabs obtained by melting and casting the steel of AJ of the range of ingredients of the present invention described in Table 1 were reheated to 1200°C, then hot rolled at a temperature of 880°C for final rolling to obtain hot rolled steel sheets. The steel sheets were cooled and held at a temperature of 600°C for 1 hour to reproduce coiling heat treatment. The obtained hot rolled steel sheets were descaled by grinding and cold rolled by a reduction rate of 70%, then preplated and pickled under the conditions of the following experiment 1):

Experiment 1 (invention example): no pickling, no Ni pre-plating

After this, a continuous annealing simulator was used for annealing at 800°C in temperature for 100 seconds, then the sheets were cooled at a 5°C/s cooling rate to 650°C, then were hot dip galvanized at 460°C and alloyed at 520°C in temperature, then were cooled at a 10°C/s cooling rate to the martensite transformation point or less, then were heated at 300°C in temperature for 60 seconds, then were cooled at a 20°C/s cooling rate to ordinary temperature. After this, the sheets were rolled by skin pass rolling by a reduction rate of 1%. The results are shown in Table 4.

Table 4

| Experiment number | Steel type | Plating adhesion plating | appearance | Class |
|---|---|---|---|---|
| 1 | AJ | Good | Good | Inv. ex. |

INDUSTRIAL APPLICABILITY

According to the present invention, it becomes possible to provide a hot dip galvanized composite high strength steel sheet excellent in shapeability and hole enlargement ability for use for automobile parts etc.

**Claims**

1.   A hot dip galvanized composite high strength steel sheet excellent in shapeability and hole enlargement ability **characterized by** containing, by mass%, C: 0.01 to 0.3%, Si: 0.005 to 0.6%, Mn: 0.1 to 3.3%, P: 0.001 to 0.06%, S: 0.001 to 0.01%, Al: 0.25 to 1.8%, and N: 0.0005 to 0.01%, optionally one or more of Mo: 0.05 to 0.5%, V: 0.01 to 0.1%, Ti: 0.01 to 0.2%, Nb: 0.005 to 0.05%, Cu: 1.0% or less, Ni: 1.0% or less, Cr: 1.0% or less, Ca: 0.0003 to 0.005%, REM: 0.0003 to 0.005%, and B: 0.0003 to 0.002%, and having a balance of Fe and unavoidable impurities, wherein the metal structure comprises ferrite and, by area ratio, 5% to 60% of tempered martensite, and 5% or less of residual austenite, wherein the hot dip galvanized composite high strength steel sheet has tensile strength (TS) x elongation (El) $\geq$ 18,000 and no preplated layer.

2.   A hot dip galvanized composite high strength steel sheet excellent in shapeability and hole enlargement ability as set forth in claim 1, **characterized in that** said hot dip galvanized composite high strength steel sheet satisfies the following equation 1:

$$(0.0012 \times [\text{TS target value}] - 0.29 - [\text{Si}])/1.45 < \text{Al} < 1.5 - 3 \times [\text{Si}] ...\ \text{equation 1}$$

[TS target value]: Design value of tensile strength of steel sheet (MPa), [Si]: Si mass%, Al: Al mass%.

3.   A method of production of a hot dip galvanized composite high strength steel sheet excellent in shapeability and hole enlargement ability **characterized by** hot rolling, then cold rolling a slab containing, by mass%, C: 0.01 to 0.3%, Si: 0.005 to 0.6%, Mn: 0.1 to 3.3%, P: 0.001 to 0.06%, S: 0.001 to 0.01%, Al: 0.25 to 1.8%, and N: 0.0005 to 0.01%, optionally one or more of Mo: 0.05 to 0.5%, V: 0.01 to 0.1%, Ti: 0.01 to 0.2%, Nb: 0.005 to 0.05%, Cu: 1.0% or less, Ni: 1.0% or less, Cr: 1.0% or less, Ca: 0.0003 to 0.005%, REM: 0.0003 to 0.005%, and B: 0.0003 to 0.002%, and having a balance of Fe and unavoidable impurities, heating the sheet in a hot dip galvanization line to $Ac_1$ to $Ac_3 + 100°C$ in temperature, holding it there for 30 seconds to 30 minutes, then cooling it by a 1°C/s or higher cooling rate to 450 to 600°C in temperature, then hot dip galvanizing it at that temperature, then cooling it by a 1°C/s or higher cooling rate to the martensite transformation point or less in temperature, then holding it at 200°C to 500°C in temperature for 1 second to 5 minutes, then cooling it by a 5°C/s or higher cooling rate to 100°C or less so as to obtain a metal structure comprising ferrite and tempered martensite of an area rate of 5% to 60%, and 5% or less of residual austenite, and the hot dip galvanized composite high strength steel sheet having tensile strength (TS) x elongation (El) $\geq$ 18,000, wherein no preplating is performed during the period from after the cold rolling to said heating in the hot dip galvanization line.

4.   A method of production of a hot dip galvanized composite high strength steel sheet excellent in shapeability and hole enlargement ability as set forth in claim 3, **characterized by** performing alloying after said hot dip galvanization.

5.  A method of production of a hot dip galvanized composite high strength steel sheet excellent in shapeability and hole enlargement ability as set forth in claim 3 or 4, **characterized by** further treating said galvanized layer or galvannealed layer by one or more of a chromate treatment, inorganic coating film treatment, chemical conversion, or resin coating film treatment.

6.  A method of production of a hot dip galvanized composite high strength steel sheet excellent in shapeability and hole enlargement ability as set forth in any one of claims 3 to 5, **characterized in that** said hot dip galvanized composite high strength steel sheet satisfies the following equation 1:

$$(0.0012 \times [\text{TS target value}] - 0.29 - [\text{Si}])/1.45 < \text{Al} < 1.5 - 3 \times [\text{Si}] \dots \text{ equation 1}$$

[TS target value]: Design value of tensile strength of steel sheet (MPa), [Si]: Si mass%, Al: Al mass%.


**Patentansprüche**

1.  Feuerverzinktes hochfestes Verbundstahlblech mit ausgezeichneter Formbarkeit und Lochaufweitbarkeit, **dadurch gekennzeichnet, dass** es in Masse-% enthält: 0,01 bis 0,3 % C, 0,005 bis 0,6 % Si, 0,1 bis 3,3 % Mn, 0,001 bis 0,06 % P, 0,001 bis 0,01 % S, 0,25 bis 1,8 % Al und 0,0005 bis 0,01 % N, optional 0,05 bis 0,5 % Mo, 0,01 bis 0,1 % V, 0,01 bis 0,2 % Ti, 0,005 bis 0,05 % Nb, höchstens 1,0 % Cu, höchstens 1,0 % Ni, höchstens 1,0 % Cr, 0,0003 bis 0,005 % Ca, 0,0003 bis 0,005 % SEM und/oder 0,0003 bis 0,002 % B sowie als Rest Fe und unvermeidliche Verunreinigungen, wobei die Metallstruktur Ferrit und nach Flächenverhältnis 5 % bis 60 % Anlassmartensit und höchstens 5 % Restaustenit aufweist, wobei das feuerverzinkte hochfeste Verbundstahlblech eine Zugfestigkeit (TS) x Dehnung (El) $\geq$ 18.000 und keine vorplattierte Schicht hat.

2.  Feuerverzinktes hochfestes Verbundstahlblech mit ausgezeichneter Formbarkeit und Lochaufweitbarkeit nach Anspruch 1, **dadurch gekennzeichnet, dass** das feuerverzinkte hochfeste Verbundstahlblech die folgende Gleichung 1 erfüllt:

$$(0,0012 \text{ x } [\text{TS-Sollwert}] - 0,29 - [\text{Si}])/1,45 < \text{Al} < 1,5 - 3 \text{ x } [\text{Si}] \quad \text{Gleichung 1}$$

[TS-Sollwert]: Bemessungswert der Zugfestigkeit des Stahlblechs (MPa), [Si]: Masse-% Si, Al: Masse-% Al.

3.  Verfahren zur Herstellung eines feuerverzinkten hochfesten Verbundstahlblechs mit ausgezeichneter Formbarkeit und Lochaufweitbarkeit, **gekennzeichnet durch** Warmwalzen, anschließendes Kaltwalzen einer Bramme, die in Masse-% enthält: 0,01 bis 0,3 % C, 0,005 bis 0,6 % Si, 0,1 bis 3,3 % Mn, 0,001 bis 0,06 % P, 0,001 bis 0,01 % S, 0,25 bis 1,8 % Al und 0,0005 bis 0,01 % N, optional 0,05 bis 0,5 % Mo, 0,01 bis 0,1 % V, 0,01 bis 0,2 % Ti, 0,005 bis 0,05 % Nb, höchstens 1,0 % Cu, höchstens 1,0 % Ni, höchstens 1,0 % Cr, 0,0003 bis 0,005% Ca, 0,0003 bis 0,005 % SEM und/oder 0,0003 bis 0,002 % B sowie als Rest Fe und unvermeidliche Verunreinigungen, Erwärmen des Blechs in einer Feuerverzinkungsanlage auf eine Temperatur von $Ac_1$ bis $Ac_3$ + 100 °C, 30-sekündiges bis 30-minütiges Halten darauf, anschließendes Kühlen auf eine Temperatur von 450 bis 600 °C mit einer Kühlgeschwindigkeit von mindestens 1 °C/s, anschließendes Feuerverzinken bei dieser Temperatur, anschließendes Kühlen auf eine Temperatur von höchstens dem Martensitumwandlungspunkt mit einer Kühlgeschwindigkeit von mindestens 1 °C/s, anschließendes 1-sekündiges bis 5-minütiges Halten auf einer Temperatur von 200 °C bis 500 °C, anschließendes Kühlen auf 100 °C oder weniger mit einer Kühlgeschwindigkeit von mindestens 5 °C/s, um eine Metallstruktur zu erhalten, die Ferrit und Anlassmartensit mit einem Flächenverhältnis von 5 % bis 60 % sowie höchstens 5 % Restaustenit aufweist, und wobei das feuerverzinkte hochfeste Verbundstahlblech eine Zugfestigkeit (TS) x Dehnung (El) $\geq$ 18.000 hat, wobei keine Vorplattierung in der Periode nach dem Kaltwalzen bis zum Erwärmen in der Feuerverzinkungsanlage durchgeführt wird.

4.  Verfahren zur Herstellung eines feuerverzinkten hochfesten Verbundstahlblechs mit ausgezeichneter Formbarkeit und Lochaufweitbarkeit nach Anspruch 3, **gekennzeichnet durch** Durchführen von Legieren nach der Feuerverzinkung.

**5.** Verfahren zur Herstellung eines feuerverzinkten hochfesten Verbundstahlblechs mit ausgezeichneter Formbarkeit und Lochaufweitbarkeit nach Anspruch 3 oder 4, **gekennzeichnet durch** weiteres Behandeln der verzinkten Schicht oder nach dem Verzinken wärmebehandelten Schicht durch eine Chromatbehandlung, anorganische Beschichtungsfilmbehandlung, chemische Umwandlung und/oder Harzbeschichtungsfilmbehandlung.

**6.** Verfahren zur Herstellung eines feuerverzinkten hochfesten Verbundstahlblechs mit ausgezeichneter Formbarkeit und Lochaufweitbarkeit nach einem der Ansprüche 3 bis 5, **dadurch gekennzeichnet, dass** das feuerverzinkte hochfeste Verbundstahlblech die folgende Gleichung 1 erfüllt:

$$(0,0012 \text{ x [TS-Sollwert]} - 0,29 - [Si])/1,45 < Al < 1,5 - 3 \text{ x [Si]} \quad \text{Gleichung 1}$$

[TS-Sollwert]: Bemessungswert der Zugfestigkeit des Stahlblechs (MPa), [Si]: Masse-% Si, Al: Masse-% Al.

**Revendications**

**1.** Tôle d'acier de résistance élevée composite galvanisée à chaud d'excellentes aptitude au façonnage et aptitude à l'élargissement de trou **caractérisée en ce qu'**elle contient, en % en masse, C : 0,01 à 0,3 %, Si : 0,005 à 0,6 %, Mn : 0,1 à 3,3 %, P : 0,001 à 0,06 %, S : 0,001 à 0,01 %, Al : 0,25 à 1,8 %, et N : 0,0005 à 0,01 %, éventuellement un ou plusieurs de Mo : 0,05 % à 0,5 %, V : 0,01 à 0,1 %, Ti : 0,01 à 0,2 %, Nb : 0,005 à 0,05%, Cu : 1,0 % ou moins, Ni : 1,0 % ou moins, Cr : 1,0 % ou moins, Ca : 0,0003 à 0,005 %, REM : 0,0003 à 0,005 %, et B : 0,0003 à 0,002 %, et ayant un reste de Fe et d'impuretés inévitables, dans laquelle la structure de métal comprend de la ferrite et, en rapport de surface, de 5 % à 60 % de martensite revenue, et 5 % ou moins d'austénite résiduelle, dans laquelle la tôle d'acier de résistance élevée composite galvanisée à chaud présente un résistance à la traction (TS) x allongement (El) $\geq$ 18,000 et aucune couche pré-plaquée.

**2.** Tôle d'acier de résistance élevée composite galvanisée à chaud d'excellentes aptitude au façonnage et aptitude à l'élargissement de trous selon la revendication 1, **caractérisée en ce que** ladite tôle d'acier de résistance élevée composite galvanisée à chaud satisfait l'équation 1 suivante :

$$(0,0012 \text{ x [valeur cible de TS]} - 0,29 - [Si])/1,45 < Al < 1,5 - 3 \text{x[Si]} ... \text{équation 1}$$

[valeur cible de TS] : valeur de conception de résistance à la traction de tôle d'acier (MPa), [Si] : % en masse de Si, Al : % en masse de Al.

**3.** Procédé de production d'une tôle d'acier de résistance élevée composite galvanisée à chaud d'excellentes aptitude au façonnage et aptitude à l'élargissement de trou **caractérisé par** le laminage à chaud, puis laminage à froid d'une plaque contenant, en % en masse, C : 0,01 à 0,3 %, Si : 0,005 à 0,6 %, Mn : 0,1 à 3,3 %, P : 0,001 à 0,06 %, S : 0,001 à 0,01 %, Al : 0,25 à 1,8 %, et N : 0,0005 à 0,01 %, éventuellement un ou plusieurs de Mo : 0,05 % à 0,5 %, V : 0,01 à 0,1 %, Ti : 0,01 à 0,2 %, Nb : 0,005 à 0,05 %, Cu : 1,0 % ou moins, Ni : 1,0 % ou moins, Cr : 1,0 % ou moins, Ca : 0,0003 à 0,005 %, REM : 0,0003 à 0,005 %, et B : 0,0003 à 0,002 %, et ayant un reste de Fe et d'impuretés inévitables, chauffage de la tôle dans une ligne de galvanisation à chaud à une température de $Ac_1$ à $Ac_3$ + 100°C, maintien de celle-ci dans celle-ci pendant de 30 secondes à 30 minutes, puis refroidissement de celle-ci à une vitesse de refroidissement de 1°C/s ou plus à une température de 450 à 600°C, puis galvanisation à chaud de celle-ci à cette température, puis refroidissement de celle-ci à une vitesse de refroidissement de 1°C/s ou plus jusqu'à la température du point de transformation de martensite ou moins, puis maintien de celle-ci à une température de 200°C à 500°C pendant de 1 seconde à 5 minutes, puis refroidissement de celle-ci à une vitesse de refroidissement de 5°C/s ou plus à 100°C ou moins afin d'obtenir une structure de métal comprenant de la ferrite et de la martensite revenue à un taux de surface de 5 % à 60 %, et 5 % ou moins d'austénite résiduelle, et la tôle d'acier de résistance élevée composite galvanisée à chaud ayant une résistance à la traction (TS) x allongement (El) $\geq$ 18,000, dans lequel aucun pré-placage n'est réalisé pendant la période après le laminage à froid jusqu'audit chauffage dans la ligne de galvanisation à chaud.

**4.** Procédé de production d'une tôle d'acier de résistance élevée composite galvanisée à chaud d'excellentes aptitude au façonnage et aptitude d'élargissement de trou selon la revendication 3, **caractérisé par** la réalisation d'un alliage après ladite galvanisation à chaud.

5. Procédé de production d'une tôle d'acier de résistance élevée composite galvanisée à chaud d'excellente aptitude au façonnage et aptitude à l'élargissement de trou selon la revendication 3 ou 4, **caractérisé par** de plus le traitement de ladite couche galvanisée ou couche galvano-recuite par un ou plusieurs d'un traitement au chromate, traitement de film de revêtement inorganique, conversion chimique ou traitement de film de revêtement de résine.

6. Procédé de production d'une tôle d'acier de résistance élevée composite galvanisée à chaud d'excellentes aptitude au façonnage et aptitude à l'élargissement de trou selon l'une quelconque des revendications 3 à 5, **caractérisé en ce que** ladite tôle d'acier de résistance élevée composite galvanisée à chaud satisfait l'équation 1 suivante :

$$(0{,}0012 \times [\text{valeur cible de TS}] - 0{,}29 - [\text{Si}])/1{,}45 < Al < 1{,}5 - 3 \times [\text{Si}] \ldots \text{équation 1}$$

[valeur cible de TS] : valeur de conception de résistance à la traction de tôle d'acier (MPa), [Si] : % en masse de Si, Al : % en masse de Al.

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2962038 B
- JP 2000345288 A
- JP 2003239040 A
- JP 2001207235 A